# EUROPÄISCHE PATENTSCHRIFT

(11) **EP 2 796 324 B1**
(45) Veröffentlichungstag und Bekanntmachung des Hinweises auf die Patenterteilung: **08.08.2018**
(21) Anmeldenummer: 14165885.6
(22) Anmeldetag: 24.04.2014
(51) Int. Cl.: B60R 11/04, H04N 5/225, B60R 11/00

(54) **Vorrichtung mit einer Kameraeinheit**
Device with a camera unit
Dispositif doté d'une caméra

(30) Priorität: 24.04.2013 US 201361815489 P
(43) Veröffentlichungstag der Anmeldung: 29.10.2014
(73) Patentinhaber: Huf Hülsbeck & Fürst GmbH & Co. KG, 42551 Velbert (DE)
(72) Erfinder: DaDeppo, Lynn, Bloomfield Hills, MI 48304 (US); Kamal, Ehab, Novi, MI 48374 (US); Bauer, Steve, Clarkston, MI 48348 (US); Newkirk, David, West Bloomfield, MI 48323 (US)
(74) Vertreter: Bals, Rüdiger

(56) Entgegenhaltungen:
- WO-A1-2011/086132
- WO-A1-2012/065603
- DE-A1-102011 017 240
- JP-A- H08 150 875
- JP-A- 2001 058 543

## Beschreibung

Die Erfindung betrifft eine Vorrichtung gemäß dem Oberbegriff von Anspruch 1, mit einer Kameraeinheit die zur Bilderfassung des Außenbereiches eines Kraftfahrzeuges dienen kann. Die Vorrichtung umfasst dabei ein Deckelelement, das über einen Antrieb zwischen einer Schließstellung, in welcher das Deckelelement eine Öffnung der Vorrichtung verdeckt, und einer Offenstellung, in welcher das Deckelelement die Öffnung freigibt, bewegt werden kann. Dabei befindet sich die Kameraeinheit in der Schließstellung des Deckelelementes von außen unzugänglich hinter dem Deckelelement und in der Offenstellung des Deckelelementes ist die Bilderfassung durch die Öffnung durchführbar. Ferner ist die Erfindung auch auf ein Verfahren, gemäß dem Oberbegriff von Anspruch 14 zum Betätigen einer Vorrichtung mit Kameraeinheit die zur Bilderfassung des Außenbereiches eines Kraftfahrzeuges dienen kann, gerichtet.

Vorrichtungen mit einer Kameraeinheit, die zu Bilderfassung des Außenbereiches eines Kraftfahrzeuges dienen, sind aus dem Stand der Technik grundsätzlich bekannt. Derartige Vorrichtungen umfassen eine Kameraeinheit, die im Bereich des unterstützten Einparkens von Kraftfahrzeugen oder als Heck- oder Frontkameras zum Einsatz kommt, und ein Deckelelement, das zwischen einer Schließstellung, in welcher das Deckelelement die Kameraeinheit verdeckt, und einer Offenstellung, in welcher das Deckelelement die Sicht für die Kameraeinheit freigibt, bewegt wird. Wird die Kameraeinheit benötigt, verfährt das Deckelelement in die Offenstellung, in welcher der gewünschte Bereich hinter oder vor dem Kraftfahrzeug durch die Kameraeinheit bildlich erfasst und auf einem Display für den Fahrer des Kraftfahrzeuges angezeigt werden kann. Wird die Kameraeinheit nicht mehr benötigt, kann das Deckelelement in die geschützte Schließstellung verschwenkt werden.

Eine derartige Vorrichtung ist aus der Druckschrift WO 2011/154290 A2 bekannt, die ein Deckelelement aufweist, um eine Öffnung der Vorrichtung zu verdecken, durch die eine Kameraeinheit die Bilderfassung durchführen kann. Das Deckelelement kann mittels eines Antriebes zwischen einer Schließstellung, in welcher das Deckelelement eine Öffnung der Vorrichtung verdeckt, und einer Offenstellung, in welcher das Deckelelement die Öffnung freigibt, bewegt werden. Bei der genannten Vorrichtung wird nur das Deckelelement bewegt, die Kameraeinheit wechselt dagegen ihre Stellung nicht und ist starr in der Vorrichtung angeordnet, sodass zur Bilderfassung nur das Deckelelement bewegt wird, um die Sicht für die Kamera freizugeben. Dabei hat sich als Nachteil herausgestellt, dass die Kamera, die unbeweglich ist und stets nach außen gerichtet ist, nicht ausreichend gegen Witterungseinflüsse geschützt ist.

Die WO 2011/086132 A zeigt eine gattungsgemäße Vorrichtung zur Erfindung. Ferner offenbart die WO 2012/065603 A eine Vorrichtung mit einer angetriebenen Kameraeinheit.

Der Erfindung liegt daher die objektive Aufgabe zugrunde, eine einfache, kostengünstige und kompakte Vorrichtung mit einer Kameraeinheit zu schaffen, welche den zuvor genannten Nachteil überwindet. Insbesondere soll die Vorrichtung die Kameraeinheit in einer Ruhestellung besonders geschützt aufnehmen können. Insbesondere sollen eindringende Verschmutzungen in die Vorrichtung trotz verschlossener Öffnung durch die Schließstellung des Deckelelementes nicht ein Objektiv der Kameraeinheit verdrecken können.

Die Aufgabe wird erfindungsgemäß durch eine Vorrichtung mit sämtlichen Merkmalen des unabhängigen Anspruchs 1 gelöst. Ebenfalls wird zur Lösung der Aufgabe ein Verfahren zur Betätigung einer Vorrichtung mit einer Kameraeinheit mit den Merkmalen des Anspruchs 12 vorgeschlagen. In den abhängigen Vorrichtungs- und Verfahrensansprüchen sind bevorzugte Weiterbildungen der Erfindung aufgeführt. Merkmale, die zur erfindungsgemäßen Vorrichtung offenbart werden, gelten dabei auch für das erfindungsgemäße Betätigungsverfahren und umgekehrt. Außerdem kann das erfindungsgemäße Verfahren aus Anspruch 12 durch die erfindungsgemäße Vorrichtung für eine Kameraeinheit durchgeführt werden.

Die vorliegende Erfindung sieht dabei vor, dass das Deckelelement selbst ein Betätigungselement für die Kameraeinheit ist, um die Kameraeinheit zwischen einer Ruhestellung und einer Betriebsstellung zu überführen. Der Erfindungsgedanke liegt dabei darin, dass die Kameraeinheit derart in die Ruhestellung verschwenkt werden kann, dass die Kameraeinheit dem Außenbereich des Kraftfahrzeuges abgewandt ist. Besonders für die Frontkameras, die den Außeneinflüssen, starkem Wind und Feuchtigkeit ausgesetzt sind, ist es wichtig, die Kameraeinheit mit ihrem Objektiv vom Außenbereich abzuwenden, um die Kameraeinheit sicher zu schützen. Es kann vorgesehen sein, dass die Kameraeinheit in die Betriebsstellung wieder in Richtung zum Außenbereich verschwenkt wird, um die Bilderfassung optimal auszuführen. Zurück in der Ruhestellung wird die Kameraeinheit um einen Winkel, beispielsweise 90°, in Richtung zum Innenbereich der Vorrichtung verschwenkt, wodurch die Kameraeinheit besonders geschützt im Inneren der Vorrichtung angeordnet ist. Vorteilhafterweise setzt der Antrieb nur das Deckelelement in Bewegung. Die Kameraeinheit wird dabei ausschließlich durch das Deckelelement als Betätigungselement angetrieben, wodurch ein indirekter Antrieb vorliegt, da die Bewegung des Antriebs ausschließlich mittels des Deckelelements auf die Kameraeinheit übertragen wird. Wenn das Deckelelement durch den Antrieb zwischen einer Schließstellung, in der die Öffnung der Vorrichtung durch das Deckelelement verschlossen ist, und einer Offenstellung, in der die Öffnung der Vorrichtung durch das Deckelelement für die Kameraeinheit freigegeben ist, bewegt wird, so treibt das Deckelelement (und nicht direkt der Antrieb) durch seine Bewegung die Kameraeinheit zwischen der Ruhestellung und der Betriebsstellung an. Wenn sich das Deckelelement in der Schließstellung befindet, befindet sich die Kamera folglich in der Ruhestellung, in der sich die Kameraeinheit geschützt hinter dem Deckelelement und abgewandt vom Außenbereich des Kraftfahrzeuges befindet. Wird das Deckelelement durch den Antrieb in die Offenstellung bewegt, so treibt dann das Deckelelement durch seine Bewegung die Kameraeinheit in die Betriebsstellung an, in welcher die Bilderfassung durchgeführt werden kann und die Kameraeinheit zum Außenbereich des Kraftfahrzeuges gerichtet ist. Wird das Deckelelement durch den Antrieb zurück in die Schließstellung angetrieben, so führt diese Bewegung des Deckelelements wiederrum zu einer Bewegung der Kameraeinheit, die dadurch zurück in die Ruhestellung überführt wird. Damit dient das Deckelelement selbst als erforderliches Betätigungselement zwischen Antrieb und der bewegbaren Kameraeinheit, um die Antriebsbewegung vom Antrieb indirekt auf die Kameraeinheit übertragen zu können.

Somit wird der Vorteil erreicht, dass die Vorrichtung nur genau einen Antrieb benötigt, um das Deckelelement direkt und die Kameraeinheit indirekt anzutreiben, wobei die Kameraeinheit zwischen der Ruhestellung und der Betriebsstellung nur durch das Deckelelement als Betätigungselement überführt wird. Der Antrieb zur Bewegung des Deckelelementes benötigt wenig Platz und wenig Bauraum innerhalb des Kraftfahrzeuges. Dadurch kann eine sehr kompakte und platzsparende Vorrichtung geschaffen werden. Vorteilhafterweise kann der Antrieb beabstandet zur Kameraeinheit angeordnet werden, da der Antrieb nur das Deckelelement antreibt, aber nicht direkt die Kameraeinheit. Dabei kann vermieden werden, dass der Antrieb, der oft elektromagnetisch ausgeführt wird, durch die elektromagnetische Strahlung die Funktion der Kameraeinheit beeinträchtigen kann. Störungen bei der Bildaufnahme können somit aufgrund des vorhandenen Abstandes zuverlässig vermieden werden. Es kann außerdem vorgesehen sein, dass während der Bewegung des Deckelelementes zwischen der Schließstellung und der Offenstellung die Außenfläche des Deckelelementes in jeder Stellung sich stets im Außenbereich des Kraftfahrzeuges befindet. Dadurch kann sichergestellt werden, dass das Deckelelement während seiner Bewegung in die jeweilige Stellung außerhalb der Fahrzeugkarosserie verbleibt, um die Fahrzeugoberfläche nicht zu beschädigen. Vorteilhafterweise ist eine derartige Vorrichtung in sämtlichen Kraftfahrzeugen im hinteren und/oder im vorderen Bereich einsetzbar. Ein weiterer Vorteil dieser Erfindung ist, dass die Außenfläche des Deckelelementes eine Beschriftung, insbesondere ein Emblem, eine Marke oder eine Zeichnung, aufweisen kann, die in jeder Stellung des Deckelelementes gut sichtbar ist.

Zudem ist es vorteilhaft, dass die Kameraeinheit in die Ruhestellung bewegt werden kann, in welcher die Kameraeinheit mit ihrem Objektiv vom Außenbereich abgewendet ist, um einen erhöhten Schutz vor Verschmutzungen zu gewährleisten. Vorzugsweise ist die Kameraeinheit dreh- und/oder schwenkbar an oder in der Vorrichtung befestigt. Dieses kann beispielsweise über ein Gelenk oder Scharnier erfolgen. Dadurch kann die Kameraeinheit bei ihrer Bewegung aus der aktiven Position in die Ruheposition derart verschwenkt werden, dass die Linse bzw. das Objektiv der Kameraeinheit in Richtung des Fahrzeuginneren also abgewandt von der Aufnahmerichtung zeigt. Hierdurch ist die Linse bzw. das Objektiv der Kameraeinheit und damit die Kameraeinheit in der Ruheposition geschützt angeordnet. Schmutzpartikel, die trotz der Abdeckung bzw. Abdichtung z.B. seitlich an dem Deckelelement entlang in Richtung zur Kameraeinheit gelangen können, können allenfalls auf das seitliche Kameragehäuse treffen, aber nicht direkt in bzw. auf das Objektiv gelangen. Die dreh- und/oder schwenkbewegbare Anordnung der Kameraeinheit ermöglicht ferner, dass während des Öffnens des Deckelelementes die Kameraeinheit so verschwenkt und/oder gedreht werden kann, dass diese optimal zu der zu überwachenden Umgebung ausgerichtet werden kann und somit die optimale Aufnahmerichtung einnimmt.

Das vorgesehene Deckelelement weist zumindest einen Antriebshebel auf, der vom Antrieb angetrieben wird, um das Deckelelement zwischen der Schließstellung und der Offenstellung zu bewegen. Der Antriebshebel kann vorteilhafterweise dreh- und/oder schwenkbar am Deckelelement angeordnet sein. Der Antriebshebel wird erfindungsgemäß als Teil des Deckelelementes definiert. Hierzu kann der Antrieb vorteilhafterweise ein Getriebe aufweisen, welches zum Antreiben und/oder zur Lagerung des Deckelelementes, insbesondere des Antriebshebels, dienen kann. Das Getriebe wird im Rahmen der vorliegenden Patentanmeldung als Teil des Antriebes definiert. Dabei kann die Wirkung des Antriebes über den Antriebshebel an das Deckelelement übertragen werden. Der Antriebshebel kann am Getriebe drehbar um eine Antriebsachse gelagert sein. Der Antriebshebel kann dabei an einer Welle gelagert sein, die durch die Antriebsachse bestimmt ist. Die Antriebsachse kann selber feststehend in der Vorrichtung angeordnet sein so dass der Antriebshebel darum gedreht wird.

Das erfindungsgemäße Getriebe kann als ein Zahnradgetriebe und/oder Schneckengetriebe ausgeführt sein. Zudem kann das Getriebe derart ausgestaltet sein, dass das Getriebe selbsthemmend ist, beispielsweise als Schneckengetriebe. Der Antrieb weist außerdem einen Antriebsmotor auf, um das Getriebe in Gang zu setzen. Der Antriebsmotor kann als ein Elektromotor, ein Linearmotor, ein elektromechanisches Übertragungselement oder dergleichen ausgebildet sein. Die Drehwirkung des Antriebsmotors kann auf ein erstes Zahnrad des Getriebes zur Erhöhung des Drehmoments übertragen werden. Das erste Zahnrad kann mit einem zweiten und/oder einem dritten Zahnrad in mechanischem Eingriff stehen. Hiermit kann ein gewünschtes Übersetzungsverhältnis geschaffen werden, um den Antriebshebel um die Antriebsachse zu drehen.

Erfindungsgemäß kann der Antriebshebel im Wesentlichen L- oder V-förmig ausgebildet sein. Dabei kann ein Ende des Antriebshebels direkt am Getriebe, insbesondere am zweiten oder dritten Zahnrad des Getriebes drehbar um die Antriebsachse gelagert sein. Denkbar ist dabei, dass der Antriebshebel drehfest mit einem Zahnrad des Getriebes verbunden oder befestigt ist und zusammen mit dem Zahnrad um die Antriebsachse gedreht werden kann. Hierzu kann ein Schenkel des L- oder V-förmigen Antriebshebels an zwei oder mehreren Punkten am Zahnrad befestigt werden, um eine höhere Stabilität der Drehbewegung zu gewährleisten. Dabei kann der zweite Schenkel des Antriebshebels als Schwenkarm des Deckelelementes dienen. An einem anderen Ende kann der Antriebshebel bzw. der zweite Schenkel des Antriebshebels schwenkbar um eine Lagerachse am Deckelelement gelagert sein, wobei die Lagerachse feststehend zum Deckelelement ausgestaltet sein kann. Dieses kann vorteilhafterweise über ein Gelenk erfolgen. Hierdurch kann das Deckelelement beim Überführen in die Offenstellung nicht nur um die Antriebsachse in Richtung nach oben sondern auch um die Lagerachse in Richtung nach unten zur Fahrzeugoberfläche verschwenkt werden. Dadurch wird erreicht, dass das Deckelelement zunächst etwas weg von der Fahrzeugoberfläche und anschließend beinahe parallel zur Fahrzeugoberfläche bewegt wird und während der Bewegung stets beabstandet zur Fahrzeugoberfläche bleibt.

Erfindungsgemäß ist vorgesehen, dass das Deckelelement wenigstens einen Betätigungshebel - insbesondere zusätzlich zum bereits erwähnten Antriebshebel - aufweist, der derart mit der Kameraeinheit zusammenwirken kann, dass die Kameraeinheit zwischen der Ruhestellung und der Betriebsstellung überführt wird. Der Betätigungshebel wird erfindungsgemäß als Teil des Deckelelementes definiert. Während der Antriebshebel oben am Deckelelement angeordnet werden kann, um das Deckelelement nach oben in die Offenstellung zu verschwenken, kann der Betätigungshebel unten am Deckelelement angeordnet werden, um die Kameraeinheit in die Betriebsstellung mitzuziehen, wenn das Deckelelement in die Offenstellung überführt wird. Der Betätigungshebel kann dabei im Wesentlichen L- oder V-förmig ausgestaltet sein. An einem Ende kann der Betätigungshebel bzw. ein erster Schenkel des Betätigungshebels schwenkbar um eine Betätigungsachse am Deckelelement gelagert sein, wobei die Betätigungsachse feststehend zum Deckelelement ausgestaltet sein kann. Dieses kann vorteilhafterweise über ein Gelenk oder Scharnier erfolgen. Ein anderes Ende des Betätigungshebels kann vorteilhafterweise drehfest mit der Kameraeinheit verbunden sein. An einem Punkt zwischen dem ersten und dem zweiten Schenkel kann der Betätigungshebel fest an einer Befestigungsachse der Vorrichtung gelagert sein, sodass der Betätigungshebel insgesamt um die Befestigungsachse gedreht wird. Die Kameraeinheit wird somit zusammen mit dem Betätigungshebel um die Befestigungsachse zwischen der Ruhestellung und der Betriebsstellung verschwenkt. Wird das Deckelelement verschwenkt, so wird die Bewegung zumindest zu einem Teil auf den Betätigungshebel übertragen. Der Betätigungshebel wird durch das Deckelelement quasi mitgezogen, sodass der Betätigungshebel um die Befestigungsachse verschwenkt wird. Wird das Deckelelement dadurch aus der Schließstellung in die Offenstellung verschwenkt, wirkt diese Bewegung derart auf den Betätigungshebel, dass dieser zusammen mit der Kameraeinheit um die Befestigungsachse gedreht wird. Hierzu kann es erfindungsgemäß vorgesehen sein, dass der Betätigungshebel und die Kameraeinheit eine gemeinsame Baueinheit bilden.

Gemäß einer bevorzugten Weiterentwicklung der Erfindung kann der Betätigungshebel einen Schlitten zur Aufnahme einer Kamera der Kameraeinheit aufweisen, um die Kamera austauschbar aufzunehmen. Die Kamera kann mittels einer Rastverbindung und/oder Bajonettverbindung form- und/oder kraftschlüssig am bzw. im Schlitten befestigt werden. Weiterhin kann die Kameraeinheit einen Adapter für die Kamera aufweisen, um unterschiedliche Kameramodelle aufnehmen zu können. Der Adapter kann ebenfalls am bzw. im Schlitten aufgenommen werden.

Ferner kann ein Montageelement in Form einer ersten Gehäuseschale vorgesehen sein, an welchem der Antrieb und/oder das Getriebe angeordnet werden können. Am Getriebe wird wiederum der Antriebshebel schwenkbar um die Antriebsachse gelagert, wobei die Antriebsachse fest am Montageelement angeordnet wird. Anschließend kann das Deckelelement am Antriebshebel über ein Drehgelenk befestigt werden. Ferner kann der Betätigungshebel mit dem Deckelelement verbunden werden, wobei der Betätigungshebel vorteilhafterweise mit der Kameraeinheit verbunden werden kann. Der Befestigungshebel wird anschließend an der Befestigungsachse am Montageelement positioniert. Dabei kann die Befestigungsachse fest am Montageelement angeordnet sein. Somit wird die Vorrichtung in Form eines Baukastens aufgebaut, die als Ganzes am Kraftfahrzeug montiert werden kann. Das Montageelement kann ferner Montagemittel aufweisen, die zur Befestigung der Vorrichtung am Kraftfahrzeug, beispielsweise an einer Ausnehmung in der Karosserie bzw. in einem Strukturbauteil des Kraftfahrzeuges dienen können. Das Montageelement kann vorteilhafterweise von außen, insbesondere über eine Rastverbindung und/oder formschlüssig und/oder kraftschlüssig am Kraftfahrzeug befestigt werden.

Ferner kann am Montageelement eine Abdeckung in Form einer zweiten Gehäuseschale vorgesehen sein. Die Abdeckung kann im Wesentlichen die Kameraeinheit und/oder den Antrieb und/oder das Getriebe abdecken und/oder abdichten. Das Montageelement und die Abdeckung können vorteilhafterweise die Vorrichtung abdichtend umschließen. Zwecks Montage kann die Vorrichtung als Ganzes herausgenommen werden, wobei lediglich die Abdeckung abgenommen werden kann, um zu der Vorrichtung zu gelangen.

Zwischen dem Montageelement und der Abdeckung kann eine Dichtung vorgesehen sein. Dadurch kann verhindert werden, dass Feuchtigkeit ins Innere des Fahrzeuges eindringen kann, beispielsweise wenn sich das Deckelelement in der Offenstellung befindet. Zudem kann eine Schutzmembran außenseitig an der Öffnung, insbesondere am Montageelement, vorgesehen sein, die den freien Raum zwischen der Öffnung und der Vorrichtung abdichtend verdeckt, um das Eindringen von Schmutzpartikeln und Feuchtigkeit zur Kameraeinheit und dem Antrieb zu verhindern. Weiterhin kann vorgesehen sein, dass an der Öffnung ein Kragenelement vorgesehen ist, an welchem das Deckelelement in der Schließstellung anliegen kann. Beim Anliegen des Deckelelementes am Kragenelement kann das Kragenelement abfedernd wirken und/oder als eine Dichtung dienen. Die Dichtung und/oder die Schutzmembran und/oder das Kragenelement können aus einem elastischen Material ausgebildet sein.

Das Montageelement und/oder die Abdeckung und/oder das Deckelelement und/oder das Getriebe und/oder der Antriebshebel und/oder der Betätigungshebel können aus einem Kunststoff, Metall, Verbundstoff oder dergleichen ausgebildet sein, das insbesondere einen höheren Härtegrad aufweist als das Material der Dichtung und/oder der Schutzmembran und/oder des Kragenelementes.

Außerdem ist es denkbar, dass die Vorrichtung eine Positionserfassung aufweisen kann, die zumindest die Schließstellung und die Offenstellung des Deckelelementes detektieren kann. Hierbei kann die Kameraeinheit entsprechend der Erfassung angesteuert werden. In der Schließstellung des Deckelelementes kann die Kameraeinheit ausgeschaltet werden und in der Offenstellung des Deckelelementes kann die Kameraeinheit eingeschaltet werden.

Ferner wird die erfindungsgemäße Aufgabe durch ein Verfahren mit den Merkmalen des Anspruchs 12 gelöst. Hierbei kann das Verfahren zum Betätigen der erfindungsgemäßen Vorrichtung dienen. Das Verfahren kann dabei mehrere Schritte aufweisen. Zunächst kann ein Antrieb, insbesondere ein Elektromotor des Antriebes, aktiviert werden, welcher ein Getriebe in Gang setzt. Der Antrieb, insbesondere das Getriebe, ist dabei dazu bestimmt, zunächst nur das Deckelelement anzutreiben. Weiterhin ist das Deckelelement dazu ausgelegt, um ebenfalls die Kameraeinheit zwischen einer Ruhestellung und einer Betriebsstellung zu bewegen, wobei diese Bewegung ausschließlich durch das Deckelelement erfolgt. Im ersten Schritt setzt der Antrieb nur das Deckelelement in Bewegung. Anschließend wird die Kameraeinheit ausschließlich durch das Deckelelement als Betätigungselement angetrieben. Das Deckelelement wird erfindungsgemäß durch den Antrieb zwischen einer Schließstellung und einer Offenstellung überführt und treibt dabei die Kameraeinheit zwischen der Ruhestellung und der Betriebsstellung an. In der Schließstellung des Deckelelementes befindet sich die Kamera in der Ruhestellung. Wird das Deckelelement in die Offenstellung bewegt, treibt das Deckelelement die Kameraeinheit in die Betriebsstellung an. Mit anderen Worten, das Deckelelement zieht die Kameraeinheit in Richtung nach außen, das heißt in die Betriebsstellung, mit sich. Wird das Deckelelement durch den Antrieb zurück in die Schließstellung angetrieben, wird die Kameraeinheit zurück in die Ruhestellung bewegt.

Erfindungsgemäß können die Merkmale der Beschreibung und der Ansprüche der erfindungsgemäßen Vorrichtung sowie des erfindungsgemäßen Verfahrens zum Betätigen der Vorrichtung sowohl einzeln für sich als auch in den verschiedensten Kombinationen erfindungswesentlich sein. Weitere, die Erfindung verbessernde Maßnahmen werden nachstehend gemeinsam in der Beschreibung des bevorzugten Ausführungsbeispiels der Erfindung anhand der Figuren näher dargestellt. Es zeigen:
- Figur 1: die erfindungsgemäße Vorrichtung in einer Explosionsansicht,
- Figur 2: die erfindungsgemäße Vorrichtung in einer Seitenansicht in der Schließstellung des Deckelelementes und
- Figur 3: die erfindungsgemäße Vorrichtung in einer Seitenansicht in der Offenstellung des Deckelelementes.

In den Figuren werden für die gleichen technischen Merkmale der Erfindung identischen Bezugszeichen verwendet.

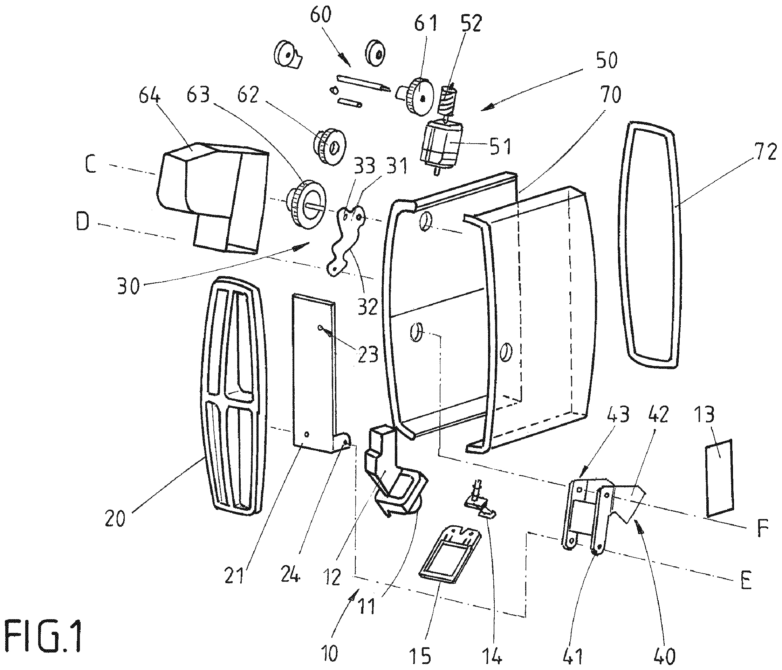

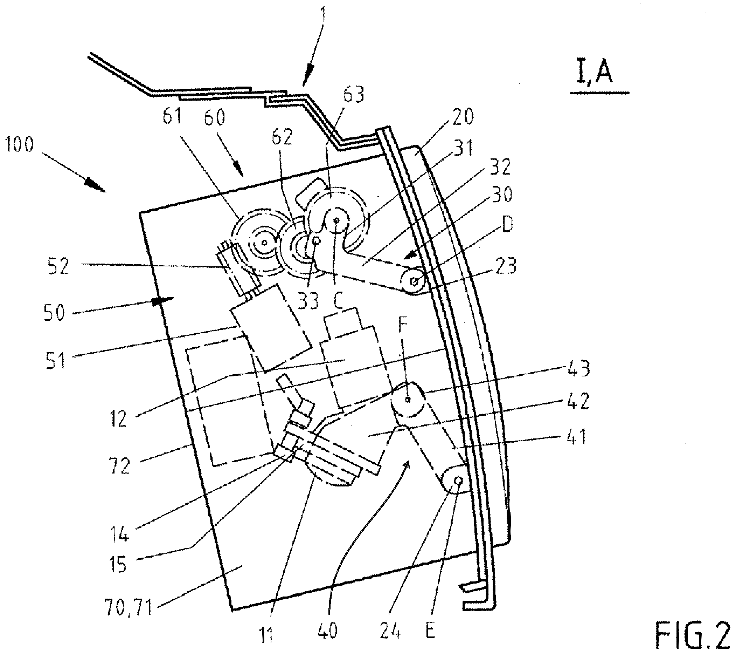

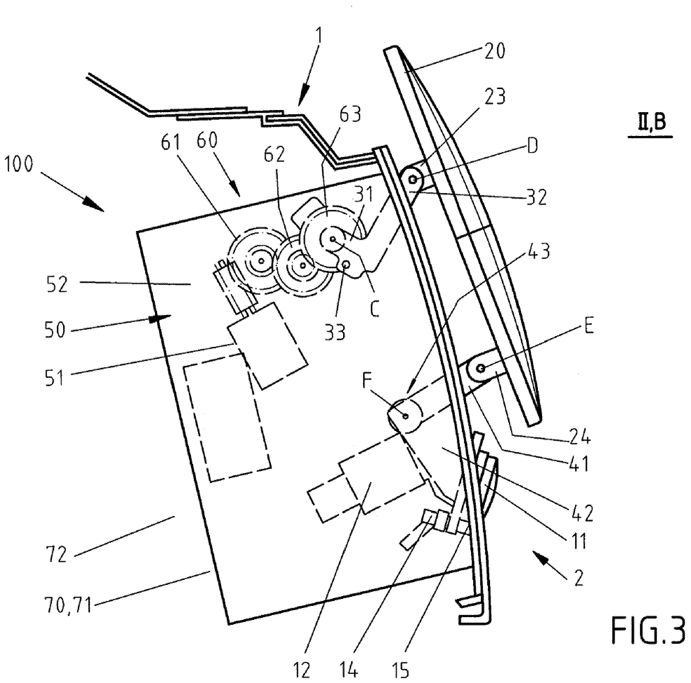

Figur 1 zeigt die erfindungsgemäße Vorrichtung 100 in einer Explosionsansicht, die ein Deckelelement 20 umfasst, welches als ein Betätigungselement für die Kameraeinheit 10 dient. Der Erfindungsgedanke liegt dabei darin, dass die Kameraeinheit 10 ausschließlich durch das Deckelelement 20 als Betätigungselement zwischen einer Ruhestellung A und einer Betriebsstellung B angetrieben wird, die in Figuren 2 und 3 dargestellt sind. Die Vorrichtung 100 umfasst dabei einen Antrieb 50, welcher nur zum Antreiben des Deckelelementes 20 zwischen einer Schließstellung I und einer Offenstellung II vorgesehen ist, um somit eine Öffnung 2, durch die die Kameraeinheit 10 ihre Bilder aufnimmt, in der Vorrichtung 100 zu verschließen oder zu öffnen. Das Deckelelement 20 steht dabei mit der Kameraeinheit 10 derart in mechanischer Verbindung, dass, wenn das Deckelelement 20 zwischen der Schließstellung I und der Offenstellung II angetrieben wird, die Kameraeinheit 10 zwischen der Ruhestellung A und der Betriebsstellung B bewegt wird.

Das erfindungsgemäße Deckelelement 20 ist mit einem Antriebshebel 30 und einem Betätigungshebel 40 ausgebildet. Der Antriebshebel 30 agiert als ein Übertragungselement zwischen dem Antrieb 50 und dem Deckelelement 20 und der Betätigungshebel 40 als ein Übertragungselement zwischen der Kameraeinheit 10 und dem Deckelelement 20. Das Deckelelement 20 kann vorteilhafterweise ein Emblem eines Kraftfahrzeuges sein. An der Innenseite des Deckelelementes 20 ist ein Befestigungselement 21 vorgesehen, welches mit Befestigungsmitteln 23, 24 zur schwenkbaren Anordnung des Antriebshebels 30 um eine Lagerachse D und des Betätigungshebels 40 um eine Betätigungsachse E ausgelegt ist. Die Lagerachse D und die Betätigungsachse E erstrecken sich beispielsweise parallel zueinander und parallel zur Erstreckungsebene des Deckelelementes 20. Die Befestigungsmittel 23, 24 sind gemäß einer Ausführungsform der Erfindung als Drehgelenke ausgebildet. Das Befestigungsmittel 23 für den Antriebshebel 30 ist im oberen Teil des Befestigungselementes 21 und das Befestigungsmittel 24 für den Betätigungshebel 40 im unteren Teil des Befestigungselementes 21 angeordnet. Die Befestigungsmittel 23, 24 sorgen dafür, dass die Bewegung des Deckelelementes 20 zwischen der Schließstellung I und der Offenstellung II zumindest zum Teil durch eine Schwenkbewegung um die Lagerachse D und eine Schwenkbewegung um die Betätigungsachse E bestimmt wird.

Ein Ende 32 des Antriebshebels 30, das dem Deckelelement 20 zugewandt ist, ist drehbar am Deckelelement 20 gelagert. Ein anderes Ende 31 des Antriebshebels 30, das dem Antrieb 50 zugewandt ist, ist über ein Getriebe 60 derart mit dem Antrieb 50 verbunden, dass der Antriebshebel 30 um eine Antriebsachse C verschwenkt werden kann. Der Antriebshebel 30 ist an einer Welle gelagert, die durch die Antriebsachse C bestimmt ist, welche parallel zur Lagerachse D verläuft. Das erfindungsgemäße Getriebe 60 ist vorteilhafterweise sowohl zum Antreiben als auch zur Lagerung des Deckelelementes 20 über den Antriebshebel 30 ausgelegt.

Der erfindungsgemäße Antrieb 50 ist ferner beabstandet zur Kameraeinheit 10 angeordnet. Dabei ist es vorteilhaft, dass der Antrieb 50, welcher ggf. elektromagnetische Strahlung aussenden kann, damit keinen negativen Einfluss auf die Funktionsweise der Kameraeinheit 10 ausüben kann. Der Antrieb 50 weist gemäß einer Ausführungsform der Erfindung einen elektrischen Motor 51 auf, der das Getriebe 60 über eine Antriebswelle 52 in Gang setzt. Der erfindungsgemäße Motor 51 kann alternativ als ein rein mechanisches Übertragungselement, ein Linearmotor oder dergleichen ausgebildet sein. Die Antriebswelle 52 ist an der Getriebeseite mit einem Schneckenrad ausgebildet, welches schraubförmig um die Antriebswelle 52 gewunden ist. Das Schneckenrad der Antriebswelle 52 steht mit einem ersten Zahnrad 61 des Getriebes 60 in mechanischem Eingriff und bildet ein selbsthemmendes Schneckenradgetriebe. Das erste Zahnrad 61 ist im dargestellten Ausführungsbeispiel als ein Stirnrad ausgebildet. Die Antriebswelle 52 verläuft senkrecht zur Welle des ersten Zahnrades 61. Die Antriebswelle 52 wird durch den Motor 51, insbesondere mit einer hohen Drehzahl, gedreht. Der Durchmesser des Zahnrades 61 kann dabei größer als der Durchmesser der Antriebswelle 52 ausgewählt werden, um ein hohes Übersetzungsverhältnis zu erzielen. Das Getriebe 60 kann ferner mit einem zweiten Zahnrad 62 und einem dritten Zahnrad 63 ausgelegt sein, um ein gewünschtes Drehmoment an den Antriebshebel 30 zu übertragen. Der Antriebshebel 30 ist dabei am antriebsseitigen Ende drehfest mit dem dritten Zahnrad 63 verbunden, um eine stabile Drehung des Antriebshebels 30 um die Antriebsachse C zu erreichen. Des Weiteren ist optional eine Abdeckhaube 64 vorgesehen, um den Antrieb 50 und das Getriebe 60 zu umschließen. Durch die Abdeckhaube 64 wird auch vermieden, dass Öl oder Fett vom Antrieb 50 oder dem Getriebe 60 in den übrigen Innenraum der Vorrichtung 100 gelangen kann, wodurch auch die Kameraeinheit 10 verschmutzen kann.

Der Betätigungshebel 40 des Deckelelementes 20 ist, wie oben beschrieben, an einem Ende 41 schwenkbar mit dem Deckelelement 20 verbunden. An einem anderen Ende 42 des Betätigungshebels 40 ist erfindungsgemäß die Kameraeinheit 10 angeordnet. Die Kameraeinheit 10 ist dabei drehfest mit dem Betätigungshebel 40 verbunden, sodass die Kameraeinheit 10 zwischen der Ruhestellung A aus der Figur 2 und der Betriebsstellung B aus der Figur 3 überführt werden kann und zwar durch eine Drehung im Gegenuhrzeigersinn um die Befestigungsachse F. Vorteilhafterweise ist der Betätigungshebel 40 mit einem Schlitten 42 zum Aufnehmen einer Kamera 11 der Kameraeinheit 10 ausgebildet, um die Kamera 11 austauschbar aufzunehmen. Der Schlitten 42 kann dabei Verbindungsmittel umfassen, um die Kamera 11 mittels einer Rastverbindung form- und/oder kraftschlüssig am Schlitten 42 aufzunehmen. Weiterhin kann der Schlitten 42 einen Adapter 12 für die Kamera 11 aufnehmen bzw. festhalten, um unterschiedliche Kameramodelle verwenden zu können. Zudem kann der Schlitten 42 eine Elektronikeinheit 13 aufnehmen, die als Steuerelektronik für die Kamera 11 dienen kann. Am Schlitten 42 ist weiterhin ein Wischer 14 mittels eines Wischerrahmens 15 optional angeordnet, um das Objektiv der Kamera 11 bei Bedarf zu reinigen.

Vorteilhafterweise umfasst die erfindungsgemäße Vorrichtung 100 ein Montageelement 70, welches in Form einer ersten Gehäuseschale ausgebildet ist, um den Antrieb 50, das Getriebe 60 und den Antriebshebel 30 sowie den Betätigungshebel 40 aufzunehmen. Am Getriebe 60 wird der Antriebshebel 30 schwenkbar um die Antriebsachse C gelagert, welche fest am Montageelement 70, insbesondere der ersten Gehäuseschale, gelagert ist. Anschließend wird das Deckelelement 20 am Antriebshebel 30 am Befestigungsmittel 23 schwenkbar angeordnet. Der Betätigungshebel 40 wird am Deckelelement 20 am Befestigungsmittel 24 ebenfalls schwenkbar angeordnet, wobei der Betätigungshebel 40 über den Schlitten 42 drehfest mit der Kameraeinheit 10 verbunden ist. Der Betätigungshebel 40 wird anschließend an der Befestigungsachse F positioniert, die fest am Montageelement 70, insbesondere der ersten Gehäuseschale, gelagert ist, und parallel der Betätigungsachse E verläuft. Anschließend wird eine Abdeckung 71 in Form einer zweiten Gehäuseschale am Montageelement 70 angebracht, die die Kameraeinheit 10, den Antrieb 50, das Getriebe 60, den Antriebshebel 30 und den Betätigungshebel 40 abdeckt. Das Montageelement 70 und die Abdeckung 71 werden durch einen Befestigungsring 72 zusammengehalten, um die Vorrichtung 100 als ein Baukasten zu umschließen. Erfindungsgemäß kann zwischen dem Montageelement 70 und der Abdeckung 71 eine Dichtung vorgesehen sein, um zum einen die Vorrichtung 100 abzudichten und zum anderen zu verhindern, dass Feuchtigkeit ins Innere des Kraftfahrzeuges eindringen kann, wenn das Deckelelement 20 sich in der Offenstellung II befindet.

Schlussendlich kann die Vorrichtung 100 als Ganzes am Kraftfahrzeug montiert werden. Hierzu kann das Montageelement 70 mit Montagemitteln ausgebildet sein, die zur Befestigung der Vorrichtung 100 am Kraftfahrzeug, beispielsweise an einer Öffnung in der Karosserie oder in einem Strukturbauteil des Kraftfahrzeuges, dienen können. Mithilfe der Montagemittel kann die Vorrichtung 100 als ein Baukasten von außen am Kraftfahrzeug angebracht werden. Dabei können die Montagemittel eine Rastverbindung und/oder einen Formschluss und/oder einen Kraftschluss der Vorrichtung 100 bzw. des Montageelementes 70 mit dem Kraftfahrzeug bzw. der Öffnung in der Karosserie oder im Strukturbauteil des Kraftfahrzeuges bilden. Zusätzlich können das Montageelement 70 und die Abdeckung 71 derart zusammengebaut werden, dass eine Öffnung 2 gebildet ist, die dem Außenbereich des Kraftfahrzeuges zugewandt ist und durch die die Kamera 11 in ihrer Betriebsstellung B den Außenbereich des Kraftfahrzeuges bildlich erfassen kann. Erfindungsgemäß verdeckt das Deckelelement 20 die Öffnung 2 in der Schließstellung I, wie in Figur 2 gezeigt. In der Offenstellung II, wie in Figur 3 gezeigt, gibt das Deckelelement 20 die Öffnung 2 frei.

Vorteilhafterweise kann an der Öffnung 2 ein Kragenelement in Form einer Dichtung vorgesehen sein, an welchem das Deckelelement 20 in seiner Schließstellung I, beispielsweise abfedernd, anliegen kann, um die Vorrichtung 100 in der Schließstellung I des Deckelelementes 20 vor Witterungseinflüssen zu schützen.

Die Figuren 2 und 3 zeigen die erfindungsgemäße Vorrichtung 100 im zusammengebauten Zustand, wobei die Figur 2 das Deckelelement 20 in der Schließstellung I und die Kameraeinheit 10 in der Ruhestellung A und die Figur 3 das Deckelelement 20 in der Offenstellung II und die Kameraeinheit 10 in der Betriebsstellung B zeigen. In der Ruhestellung A der Figur 2 befindet sich die Kameraeinheit 10 geschützt im Inneren der Vorrichtung 100 hinter dem Deckelelement 20 und mit dem Objektiv abgewandt von dem Außenbereich des Kraftfahrzeuges. In der Betriebsstellung B der Figur 3 ist die Kameraeinheit 10 nach außen verschwenkt, sodass das Objektiv der Kamera 11 dem Außenbereich des Kraftfahrzeuges zugewandt ist und zum Teil aus der Vorrichtung 100 herausgefahren ist. Besonders im Frontbereich des Kraftfahrzeuges sind Kameraeinheiten starken Witterungseinflüssen ausgesetzt. Bei Fahren kann außerdem auf das Deckelelement 20 ein starker Wind einwirken, sodass in der Vorrichtung ein Überdruck entstehen kann. Dabei ist es besonders vorteilhaft, dass die erfindungsgemäße Kameraeinheit 10 in der Ruhestellung A zum Inneren des Kraftfahrzeuges zeigt und somit besonders geschützt vor äußeren Einflüssen ist. Zwischen der Stellung der Figur 2 und der Stellung der Figur 3 kann die Kameraeinheit 10 vorteilhafterweise fast um 90° oder sogar mehr gedreht werden.

Wie es in den Figuren 2 und 3 zu erkennen ist, ist der Antriebshebel 30 im Wesentlichen V-förmig ausgebildet. Der Antriebshebel 30 weist dabei einen ersten Schenkel 31 auf, welcher am Getriebe 60 gelagert ist. In dem dargestellten Ausführungsbeispiel der Erfindung ist der Antriebshebel 30 am dritten Zahnrad 63 des Getriebes 60 drehfest über zumindest zwei Punkten befestigt. Im ersten Punkt ist der erste Schenkel 31 des Antriebshebels 30 mit der Drehachse des dritten Zahnrades 63, die die Antriebsachse C bestimmt, verbunden. Im zweiten Punkt, der den Scheitelpunkt 33 des Antriebshebels 30 bestimmt, ist der erste Schenkel 31 des Antriebshebels 30 am Rande des dritten Zahnrades 63 befestigt. Dadurch wird erreicht, dass der Antriebshebel 30 eine stabile Drehung um die Antriebsachse C ausführen kann und das Deckelelement 20 sicher zwischen der Offenstellung II und der Schließstellung I überführen kann. Am zweiten Schenkel 32 des Antriebshebels 30 ist das Deckelelement 20 an der Lagerachse D mittels des Befestigungsmittels 23 schwenkbar angeordnet. Zum einen wird das Deckelelement 20 zusammen mit dem Antriebshebel 30 um die Antriebsachse C im Gegenuhrzeigersinn aufgeschwenkt und zum anderen in eine umgekehrte Richtung um die Lagerachse D zurückgeschwenkt, sodass das Deckelelement 20 zunächst von der Fahrzeugoberfläche 1 entfernt wird und anschließend im Wesentlichen parallel zur Fahrzeugoberfläche 1 verfahren wird. Dadurch wird erreicht, dass das Deckelelement 20 die Fahrzeugoberfläche 1 nicht beschädigt, wenn es aus der Schließstellung I in die Offenstellung II bewegt wird.

In dem in den Figuren 2 und 3 dargestellten Ausführungsbeispiel der Erfindung ist der Betätigungshebel 40 ebenfalls V-förmig ausgeführt. Ein erster Schenkel 41 des Betätigungshebels 40 ist, wie oben gezeigt, mittels des Befestigungsmittels 24 schwenkbar um eine Betätigungsachse F am Deckelelement 20 gelagert. An einem zweiten Schenkel 42 des Betätigungshebels 40 ist ein Schlitten 42 für die Kameraeinheit 10 vorgesehen. Dabei ist der Betätigungshebel 40 an einem Scheitelpunkt 43 zwischen dem ersten Schenkel 41 und dem zweiten Schenkel 42 drehbar um die Befestigungsachse F gelagert, die fest am Montageelement 70 positioniert ist. Die Kameraeinheit 10 wird dabei zusammen mit dem Schlitten 42 ausschließlich um die Befestigungsachse F zwischen der Ruhestellung A der Figur 2 und der Betriebsstellung B der Figur 3 verschwenkt. Wird das Deckelelement 20 verschwenkt, so wird die Bewegung zumindest zum Teil auf den Betätigungshebel 40 übertragen. Der Betätigungshebel 40 zieht anschließend die Kameraeinheit 10 mit, die um die Befestigungsachse F verschwenkt wird, während der Betätigungshebel 40 seine relative Position zum Deckelelement 20 um die Betätigungsachse E verändert.

Die Funktionsweise der erfindungsgemäßen Vorrichtung 100 wird nachfolgend anhand des Übergangs zwischen der Schließstellung I des Deckelelementes 20 in der Figur 2 und der Offenstellung II in der Figur 3 erklärt. Erfindungsgemäß wird die antreibende Wirkung des Antriebes 50 über das Getriebe 60 an den Antriebshebel 30 übertragen. Der Antriebshebel 30 wird dabei im Gegenuhrzeigersinn um die Antriebsachse C verschwenkt. Diese Drehbewegung des Antriebshebels 30 wird auf das Deckelelement 20 übertragen, wobei durch die schwenkbare Anordnung des Antriebshebels 30 am Deckelelement 20 und das Gewicht der Kameraeinheit 10 am Betätigungshebel 40 die Drehung des Deckelelementes 20 um die Antriebsachse C abgebremst wird. Ausgehend von der Stellung in Figur 2 fängt das Deckelelement 20 an, sich zum Teil um die Lagerachse D zu drehen. Die Bewegung des Deckelelementes 20 zieht die Bewegung der Kameraeinheit 10 nach sich, welche über den Betätigungshebel 40 mitgenommen wird. Dabei verschwenkt der Betätigungshebel 40 relativ zum Deckelelement 20, wobei die Kameraeinheit 10 ausschließlich um die Befestigungsachse F im Gegenuhrzeigersinn gedreht wird. Wenn das Deckelelement 20 also in die Offenstellung II der Figur 3 bewegt wird, treibt das Deckelelement 20 allein die Kameraeinheit 10 in die Betriebsstellung B an, in welcher die Bilderfassung durchgeführt werden kann und die Kameraeinheit 10 nach außen gerichtet ist. Wenn das Deckelelement 20 zurück in die Schließstellung I der Figur 2 angetrieben wird, treibt es allein die Kameraeinheit 10 zurück in die Ruhestellung A.

Von der Offenstellung II des Deckelelementes 20 mit der Betriebsstellung B der Kameraeinheit 10 in der Figur 3 gelangt das Deckelelement 20 zurück in die Schließstellung I durch die umgekehrte Bewegung, die zuvor beschrieben worden ist. Hierbei wird die Kameraeinheit 10 in die Ruhestellung A, überführt aus der Figur 2, indem der Antrieb 50 nunmehr in umgekehrte Richtung betrieben wird. Hierdurch dreht sich nunmehr auch der Antriebshebel 30 im Uhrzeigersinn um die Antriebsachse C sowie dann der Betätigungshebel 40 - durch die Bewegung des Deckelelementes 20 gezogen - im Uhrzeigersinn um die Befestigungsachse F.

Erfindungsgemäß ist es vorteilhaft, dass die Vorrichtung 100 nur einen Antrieb 50 benötigt, um das Deckelelement 20 und die Kameraeinheit 10 anzutreiben, wobei die Kameraeinheit 10 nur durch das Deckelelement 20 mitbewegt wird. Außerdem ist es vorteilhaft, dass die Kameraeinheit 10 in der Ruhestellung A derart positioniert wird, dass die Kamera 11 dem Außenbereich des Kraftfahrzeuges abgewandt ist, wobei in der Betriebsstellung B die Kamera 11 optimal nach außen gerichtet ist. Dies schützt das Objektiv der Kamera 11 vor äußeren Einflüssen und Verschmutzungen, wenn das Deckelelement 20 sich in der Schließstellung I befindet. Schmutzpartikel, die trotz des Deckelelementes 20 ins Innere der Vorrichtung 100 gelangen können, können daher nicht direkt auf das Objektiv der Kamera 11 treffen. Vorteilhafterweise kann die erfindungsgemäße Vorrichtung 100 als Einparkhilfe im hinteren Bereich oder als eine Frontkamera im vorderen Bereich des Kraftfahrzeuges zum Einsatz kommen.

### Bezugszeichenliste

- 1: Karosserie/Strukturbauteil/Fahrzeugoberfläche
- 2: Öffnung

- 10: Kameraeinheit
- 11: Kamera
- 12: Adapter
- 13: Elektronikeinheit
- 14: Wischer
- 15: Wischerrahmen

- 20: Deckelelement
- 21: Befestigungselement
- 23: Befestigungsmittel für den Antriebshebel
- 24: Befestigungsmittel für den Betätigungshebel

- 30: Antriebshebel
- 31: erster Schenkel des Antriebshebels
- 32: zweiter Schenkel des Antriebshebels/Schwenkarm
- 33: Scheitelpunkt des Antriebshebels

- 40: Betätigungshebel
- 41: erster Schenkel des Betätigungshebels
- 42: zweiter Schenkel des Betätigungshebels/Schlitten
- 43: Scheitelpunkt des Betätigungshebels

- 50: Antrieb
- 51: Motor
- 52: Antriebswelle
- 60: Getriebe
- 61: erstes Zahnrad
- 62: zweites Zahnrad
- 63: drittes Zahnrad
- 64: Abdeckhaube

- 70: Montageelement
- 71: Abdeckung
- 72: Befestigungsring

- I: Schließstellung des Deckelelementes 20
- II: Offenstellung des Deckelelementes 20

- A: Ruhestellung der Kameraeinheit 10
- B: Betriebsstellung der Kameraeinheit 10

- C: Antriebsachse des Antriebshebels 30
- D: Lagerachse des Antriebshebels 30
- E: Betätigungsachse des Betätigungshebels 40
- F: Befestigungsachse des Betätigungshebels 40

- 100: Vorrichtung

## Patentansprüche

1. Vorrichtung (100) mit einer Kameraeinheit (10), die zur Bilderfassung des Außenbereiches eines Kraftfahrzeuges dient, und einem Deckelelement (20), das über einen Antrieb (50) zwischen einer Schließstellung (I), in welcher das Deckelelement (20) eine Öffnung (2) der Vorrichtung (100) abdeckt,
und einer Offenstellung (II), in welcher das Deckelelement (20) die Öffnung (2) freigibt, bewegbar ist,
wobei in der Schließstellung (I) des Deckelelementes (20) die Kameraeinheit (10) von außen unzugänglich sich hinter dem Deckelelement (20) befindet und in der Offenstellung (II) des Deckelelementes (20) die Bilderfassung durchführbar ist,
wobei das Deckelelement (20) ein Betätigungselement für die Kameraeinheit (10) ist, um die Kameraeinheit (10) zwischen einer Ruhestellung (A) und einer Betriebsstellung (B) zu überführen,
wobei das Deckelelement (20) einen Antriebshebel (30) aufweist, der vom Antrieb (50) antreibbar ist, um das Deckelelement (20) zwischen der Schließstellung (I) und der Offenstellung (II) zu bewegen
**dadurch gekennzeichnet,**
**dass** das Deckelelement (20) einen Betätigungshebel (40) aufweist, der derart mit der Kameraeinheit (10) zusammenwirkt, dass die Kameraeinheit (10) zwischen der Ruhestellung (A) und der Betriebsstellung (B) verschwenkbar ist.

2. Vorrichtung (100) nach Anspruch 1,
**dadurch gekennzeichnet,**
**dass** der Antrieb (50) ein Getriebe (60) aufweist, welches zum Antreiben und/oder zur Lagerung des Deckelelementes (20), insbesondere des Antriebshebels (30), dient, und dass insbesondere das Getriebe (60) als ein Zahnradgetriebe ausgeführt ist, wobei insbesondere das Getriebe (60) selbsthemmend ist.

3. Vorrichtung (100) nach einem der vorhergehenden Ansprüche,
**dadurch gekennzeichnet,**
**dass** die Kameraeinheit (10) am Deckelelement (20), insbesondere am Betätigungshebel (40), angeordnet ist, und dass insbesondere der Betätigungshebel (40) mit der Kameraeinheit (10) eine gemeinsame Baueinheit bilden.

4. Vorrichtung (100) nach einem der vorhergehenden Ansprüche,
**dadurch gekennzeichnet,**
**dass** der Betätigungshebel (40) einen Schlitten (41) zur Aufnahme einer Kamera (11) der Kameraeinheit (10) aufweist, um die Kamera (11) austauschbar aufzunehmen, und dass insbesondere die Kameraeinheit (10) einen Adapter (12) für die Kamera (11) aufweist.

5. Vorrichtung (100) nach einem der vorhergehenden Ansprüche,
**dadurch gekennzeichnet,**
**dass** ein Montageelement (70) in Form einer ersten Gehäuseschale (70) vorgesehen ist, an welchem der Antrieb (50) und/oder das Getriebe (60) angeordnet sind/ist.

6. Vorrichtung (100) nach einem der vorhergehenden Ansprüche,
**dadurch gekennzeichnet,**
**dass** der Betätigungshebel (40) schwenkbar um eine Betätigungsachse (E) am Deckelelement (20) gelagert ist, und dass insbesondere der Betätigungshebel (40) schwenkbar um eine Befestigungsachse (F) am Montageelement (70) gelagert ist.

7. Vorrichtung (100) nach Anspruch 1,
**dadurch gekennzeichnet,**
**dass** der Antriebshebel (30) schwenkbar um eine Lagerachse (D) am Deckelelement (20) gelagert ist, und dass insbesondere der Antriebshebel (30) schwenkbar um eine Antriebsachse (C) am Getriebe (60) angeordnet ist.

8. Vorrichtung (100) nach Anspruch 1,
**dadurch gekennzeichnet,**
**dass** der Antriebshebel (30) und/oder der Betätigungshebel (40) im Wesentlichen L- oder V- förmig ausgebildet sind/ist.

9. Vorrichtung (100) nach Anspruch 5,
**dadurch gekennzeichnet,**
**dass** das Montageelement (70) Montagemittel aufweist, die zur Befestigung der Vorrichtung (100) am Kraftfahrzeug, insbesondere an der Karosserie (1) oder einem Strukturbauteil (1), dienen, wobei insbesondere das Montageelement (70) von außen am Kraftfahrzeug, insbesondere an der Karosserie (1) oder am Strukturbauteil (1), befestigbar ist.

10. Vorrichtung (100) nach Anspruch 5,
**dadurch gekennzeichnet,**
**dass** das Montageelement (70) eine Abdeckung in Form einer zweiten Gehäuseschale aufweist, die im Wesentlichen die Kameraeinheit (10) und/oder den Antrieb (50) und/oder das Getriebe (60) abdeckt und/oder abdichtet.

11. Vorrichtung (100) nach einem der vorhergehenden Ansprüche,
**dadurch gekennzeichnet,**
**dass** die Öffnung (2) ein Kragenelement aufweist, an welchem das Deckelelement (20) anliegt, wenn das Deckelelement (20) sich in der Schließstellung (I) befindet, wobei insbesondere das Kragenelement beim Anliegen des Deckelelementes (20) abfedernd wirkt und/oder als eine Dichtung dient.

12. Verfahren zum Betätigen einer Vorrichtung (100) mit einer Kameraeinheit (10), die zur Bilderfassung des Außenbereiches eines Kraftfahrzeuges dient, und einem Deckelelement (20), das über einen Antrieb (50) zwischen einer Schließstellung (I), in welcher das Deckelelement (20) eine Öffnung (2) der Vorrichtung (100) abdeckt,
und einer Offenstellung (II), in welcher das Deckelelement (20) die Öffnung (2) freigibt, bewegt wird,
wobei in der Schließstellung (I) des Deckelelementes (20) die Kameraeinheit (10) von außen unzugänglich sich hinter dem Deckelelement (20) befindet und in der Offenstellung (II) des Deckelelementes (20) die Bilderfassung durchführbar ist,
wobei der Antrieb (50) das Deckelelement (20) antreibt,
wobei das Deckelelement (20) die Kameraeinheit (10) zwischen einer Ruhestellung (A) und einer Betriebsstellung (B) bewegt, wobei das Deckelelement (20) einen Antriebshebel (30) aufweist, der vom Antrieb (50) angetrieben wird, um das Deckelelement (20) zwischen Schließstellung (I) und der Offenstellung (II) zu bewegen,
**dadurch gekennzeichnet,**
**dass** das Deckelelement (20) einen Betätigungshebel (40) aufweist, der derart mit der Kameraeinheit (10) zusammenwirkt, dass die Kameraeinheit (10) zwischen der Ruhestellung (A) und der Betriebsstellung (B) verschwenkt wird.

13. Verfahren zum Betätigen einer Vorrichtung (100) nach einem der Ansprüche 1 bis 11.

## Claims

1. A device (100) with a camera unit (10), which is used to capture images of the outer region of a motor vehicle, and a cover element (20), which can be moved by means of a drive (50) between a closed position (I) in which the cover element (20) covers an opening (2) of the device (100),
and an open position (II) in which the cover element (20) exposes the opening (2),
the camera unit (10) being situated, inaccessibly from the outside, behind the cover element (20) when the cover element (20) is in the closed position (I), and image capture being possible when the cover element (20) is in the open position (II),
the cover element (20) being an actuation element for the camera unit (10), for transferring the camera unit (10) between a rest position (A) and an operating position (B),
the cover element (20) having a drive lever (30) which can be driven by the drive (50) to move the cover element (20) between the closed position (I) and the open position (II),
**characterised in that**
the cover element (20) has an actuation lever (40) which interacts with the camera unit (10) in such a manner that the camera unit (10) is pivotable between the rest position (A) and the operating position (B).

2. The device (100) according to Claim 1,
**characterised in that**
the drive (50) has a gearing mechanism (60) which is used to drive and/or support the cover element (20), in particular the drive lever (30), and in particular the gearing mechanism (60) is in the form of a toothed gearing, wherein in particular the gearing mechanism (60) is self-locking.

3. The device (100) according to any one of the preceding claims,
**characterised in that**
the camera unit (10) is arranged on the cover element (20), in particular on the actuation lever (40), and in particular the actuation lever (40) and that the camera unit (10) form a common structural unit.

4. The device (100) according to any one of the preceding claims,
**characterised in that**
the actuation lever (40) has a carriage (41) for holding a camera (11) of the camera unit (10), for holding the camera (11) in an exchangeable manner, and in particular the camera unit (10) has an adapter (12) for the camera (11).

5. The device (100) according to any one of the preceding claims,
**characterised in that**
a mounting element (70) in the form of a first housing shell (70) is provided, on which the drive (50) and/or the gearing mechanism (60) is/are arranged.

6. The device (100) according to any one of the preceding claims,
**characterised in that**
the actuation lever (40) is mounted on the cover element (20) such that the actuation lever can pivot about an actuation axis (E), and in particular the actuation lever (40) is mounted on the mounting element (70) such that the actuation lever can pivot about a fastening axis (F).

7. The device (100) according to Claim 1,
**characterised in that**
the drive lever (30) is mounted on the cover element (20) such that the drive lever can pivot about a bearing axis (D), and in particular the drive lever (30) is arranged on the gearing mechanism (60) such that the drive lever can pivot about a drive axis (C).

8. The device (100) according to Claim 1,
**characterised in that**
the drive lever (30) and/or the actuation lever (40) is/are substantially L- or V-shaped.

9. The device (100) according to Claim 5,
**characterised in that**
the mounting element (70) has mounting means which are used for fastening the device (100) to the motor vehicle, in particular to the body (1) or to a structural component (1), wherein in particular the mounting element (70) can be fastened from outside to the motor vehicle, in particular to the body (1) or to the structural component (1).

10. The device (100) according to Claim 5,
**characterised in that**
the mounting element (70) has a covering in the form of a second housing shell which substantially covers and/or seals the camera unit (10) and/or the drive (50) and/or the gearing mechanism (60).

11. The device (100) according to any one of the preceding claims,
**characterised in that**
the opening (2) has a collar element against which the cover element (20) bears when the cover element (20) is in the closed position (I), wherein in particular the collar element has a resilient effect and/or acts as a seal when the cover element (20) bears against it.

12. A method for operating a device (100) with a camera unit (10), which is used to capture images of the outer region of a motor vehicle, and a cover element (20), which is moved by means of a drive (50) between a closed position (I) in which the cover element (20) covers an opening (2) of the device (100),
and an open position (II) in which the cover element (20) exposes the opening (2),
the camera unit (10) being situated, inaccessibly from the outside, behind the cover element (20) when the cover element (20) is in the closed position (I), and image capture being possible when the cover element (20) is in the open position (II),
the drive (50) driving the cover element (20),
the cover element (20) moving the camera unit (10) between a rest position (A) and an operating position (B), the cover element (20) having a drive lever (30) which is driven by the drive (50) to move the cover element (20) between the closed position (I) and the open position (II),
**characterised in that**
the cover element (20) has an actuation lever (40) which interacts with the camera unit (10) in such a manner that the camera unit (10) is pivoted between the rest position (A) and the operating position (B).

13. A method for operating a device (100) according to any one of Claims 1 to 11.

## Revendications

1. Dispositif (100) équipé d'une unité caméra (10) qui sert à l'acquisition d'images de la zone extérieure d'un véhicule automobile, et d'un élément de recouvrement (20) qui peut être déplacé au moyen d'un entraînement (50) entre une position fermée (I) dans laquelle l'élément de recouvrement (20) recouvre une ouverture (2) du dispositif (100)
et une position ouverte (II) dans laquelle l'élément de recouvrement (20) libère l'ouverture (2),
dans lequel, dans la position fermée (I) de l'élément de recouvrement (20), l'unité caméra (10) se trouve derrière l'élément de recouvrement (20) et est inaccessible de l'extérieur et, dans la position ouverte (II) de l'élément de recouvrement (20), l'acquisition d'images est réalisable,
dans lequel l'élément de recouvrement (20) est un élément d'actionnement pour l'unité caméra (10), servant à transférer l'unité caméra (10) entre une position de repos (A) et une position de fonctionnement (B),
dans lequel l'élément de recouvrement (20) présente un levier d'entraînement (30) pouvant être entraîné par l'entraînement (50) pour déplacer l'élément de recouvrement (20) entre la position fermée (I) et la position ouverte (II),
**caractérisé en ce**
**que** l'élément de recouvrement (20) présente un levier d'actionnement (40) qui coopère avec l'unité caméra (10) de telle sorte que l'unité caméra (10) puisse pivoter entre la position de repos (A) et la position de fonctionnement (B).

2. Dispositif (100) selon la revendication 1,
**caractérisé en ce**
**que** l'entraînement (50) présente une transmission (60) qui sert à entraîner et/ou à supporter l'élément de recouvrement (20), en particulier le levier d'entraînement (30), et **en ce que** la transmission (60) est conçue en particulier comme une transmission à engrenages, la transmission (60) étant en particulier autobloquante.

3. Dispositif (100) selon l'une des revendications précédentes,
**caractérisé en ce**
**que** l'unité caméra (10) est disposée sur l'élément de recouvrement (20), en particulier sur le levier d'actionnement (40), et **en ce que** le levier d'actionnement (40) forme en particulier une unité commune avec l'unité caméra (10).

4. Dispositif (100) selon l'une des revendications précédentes,
**caractérisé en ce**
**que** le levier de commande (40) présente un chariot (41) destiné à recevoir une caméra (11) de l'unité caméra (10) afin de recevoir de manière interchangeable la caméra (11), et **en ce que** l'unité caméra (10) présente en particulier un adaptateur (12) pour la caméra (11).

5. Dispositif (100) selon l'une des revendications précédentes,
**caractérisé en ce**
**qu'**un élément de montage (70) est prévu sous la forme d'une première coque de boîtier (70) sur laquelle sont disposés l'entraînement (50) et/ou la transmission (60).

6. Dispositif (100) selon l'une des revendications précédentes,
**caractérisé en ce**
**que** le levier d'actionnement (40) est monté pivotant autour d'un axe d'actionnement (E) sur l'élément de recouvrement (20), et **en ce que** le levier d'actionnement (40) est en particulier monté pivotant autour d'un axe de fixation (F) sur l'élément de montage (70).

7. Dispositif (100) selon la revendication 1,
**caractérisé en ce**
**que** le levier d'entraînement (30) est monté pivotant autour d'un axe de support (D) sur l'élément de recouvrement (20), et **en ce que** le levier d'entraînement (30) est en particulier disposé pivotant autour d'un axe d'entraînement (C) sur la transmission (60).

8. Dispositif (100) selon la revendication 1,
**caractérisé en ce**
**que** le levier d'entraînement (30) et/ou le levier d'actionnement (40) sont essentiellement réalisés en forme de L ou de V.

9. Dispositif (100) selon la revendication 5,
**caractérisé en ce**
**que** l'élément de montage (70) présente des moyens de montage qui servent à fixer le dispositif (100) au véhicule automobile, en particulier à la carrosserie (1) ou à un élément de structure (1), l'élément de montage (70) pouvant en particulier être fixé de l'extérieur au véhicule automobile, en particulier à la carrosserie (1) ou à l'élément de structure (1).

10. Dispositif (100) selon la revendication 5,
**caractérisé en ce**
**que** l'élément de montage (70) présente un couvercle sous la forme d'une seconde coque de boîtier qui recouvre et/ou étanchéifie sensiblement l'unité caméra (10) et/ou l'entraînement (50) et/ou la transmission (60).

11. Dispositif (100) selon l'une des revendications précédentes,
**caractérisé en ce**
**que** l'ouverture (2) présente un élément formant collerette contre lequel l'élément de recouvrement (20) est en appui lorsque l'élément de recouvrement (20) est en position fermée (I), l'élément formant collerette agissant en particulier comme amortisseur et/ou servant de joint lorsque l'élément de recouvrement (20) y est en appui.

12. Procédé d'actionnement d'un dispositif (100) équipé d'une unité caméra (10) qui sert à l'acquisition d'images de la zone extérieure d'un véhicule automobile, et d'un élément de recouvrement (20) qui, au moyen d'un entraînement (50), est déplacé entre une position fermée (I) dans laquelle l'élément de recouvrement (20) recouvre une ouverture (2) du dispositif (100) et une position ouverte (II) dans laquelle l'élément de recouvrement (20) libère l'ouverture (2),
dans lequel, dans la position fermée (I) de l'élément de recouvrement (20), l'unité caméra (10) se trouve derrière l'élément de recouvrement (20) et est inaccessible de l'extérieur et, dans la position ouverte (II) de l'élément de recouvrement (20), l'acquisition d'images est réalisable,
dans lequel l'entraînement (50) entraîne l'élément de recouvrement (20),
dans lequel l'élément de recouvrement (20) déplace l'unité caméra (10) entre une position de repos (A) et une position de fonctionnement (B), l'élément de recouvrement (20) présentant un levier d'entraînement (30) entraîné par l'entraînement (50) pour déplacer l'élément de recouvrement (20) entre la position fermée (I) et la position ouverte (II),
**caractérisé en ce**
**que** l'élément de recouvrement (20) présente un levier d'actionnement (40) qui coopère avec l'unité caméra (10) de telle sorte que l'unité caméra (10) pivote entre la position de repos (A) et la position de fonctionnement (B).

13. Procédé d'actionnement d'un dispositif (100) selon l'une des revendications 1 à 11.
